# EUROPEAN PATENT APPLICATION

(11) **EP 4 664 267 A1**
(43) Date of publication of application: **17.12.2025**
(21) Application number: 23923696.1
(22) Date of filing: 07.10.2023
(51) Int. Cl.: G06F 3/14

(54) **SCREEN PROJECTION SYSTEM, SCREEN PROJECTION METHOD, SOURCE DEVICE, AND STORAGE MEDIUM**

(30) Priority: 23.02.2023 CN 202310207583
(71) Applicant: Huawei Technologies Co., Ltd., Shenzhen, Guangdong 518129 (CN)
(72) Inventor: LI, Xiaohua, Shenzhen, Guangdong 518129 (CN); LIU, Tianfu, Shenzhen, Guangdong 518129 (CN)
(74) Representative: Maiwald GmbH
(86) International application number: PCT/CN2023/123273
(87) International publication number: WO 2024/174531

(57) **Abstract**

A projection system, a projection method, a source device, and a storage medium are provided, and relate to the field of communication technologies. The projection system includes a source device and a plurality of display devices communicatively connected to the source device. The source device may be configured to send, based on a received window projection operation (S1801), display data of each of a plurality of application windows running on the source device to a target display device corresponding to each application window (S1802), so that the same source device projects images of different application windows to the plurality of display devices respectively. In this way, content in the plurality of application windows can be simultaneously displayed to a viewer through the plurality of display devices, so that the viewer can view content in different application windows based on a requirement. A user does not need to frequently walk to the source device to perform an operation on the source device, so that an operation process of the user can be simplified.

## Description

### CROSS-REFERENCE TO RELATED APPLICATIONS

This application claims priority to Chinese Patent Application No. 202310207583.4, filed with the China National Intellectual Property Administration on February 23, 2023 and entitled "PROJECTION SYSTEM, PROJECTION METHOD, SOURCE DEVICE, AND STORAGE MEDIUM", which is incorporated herein by reference in its entirety.

### TECHNICAL FIELD

This application relates to the field of communication technologies, and in particular, to a projection system, a projection method, a source device, and a storage medium.

### BACKGROUND

In a current projection manner, content displayed on a display of a source device is usually projected to a display device, and when content of a plurality of application windows needs to be displayed on the display device, a display region of each application window is usually scaled down, to display the plurality of application windows on the display device. If an excessively large quantity of application windows are displayed on the display device, the display region of each application window is excessively small. Consequently, the displayed content is not clear enough.

To make a viewer clearly view the content displayed on the display device, a user needs to perform an operation on the source device, and frequently switch between different application windows, so that application windows are displayed on the display device in a changing manner, allowing the viewer to view the content in the plurality of application windows. In this process, the user needs to frequently walk to the source device to perform the operation on the source device, and an operation process is complex.

### SUMMARY

This application provides a projection system, a projection method, a source device, and a storage medium, so that content in a plurality of application windows of a same source device can be simultaneously displayed to a viewer through a plurality of display devices.

According to a first aspect, an embodiment of this application provides a projection system. The projection system includes a source device and a plurality of display devices communicatively connected to the source device. The source device may be configured to send, based on a received window projection operation, display data of each of the plurality of application windows running in the source device to a target display device corresponding to each application window. A first display device in the plurality of display devices is configured to receive and display display data of a first application window from the source device. The first display device is a target display device corresponding to the first application window, and the first application window is any one of the plurality of application windows.

The window projection operation may be an operation input by a user on the source device, and the window projection operation is used to specify the target display device corresponding to each application window. For example, the user may specify, on the source device, the plurality of application windows and the target display device corresponding to each application window, and then click a "Complete" button to input the window projection operation. Alternatively, the window projection operation may include a plurality of operations input by the user. For example, the window projection operation may include a first window projection operation and a second window projection operation. The first window projection operation is used to indicate that the first application window corresponds to the first display device, and the second window projection operation is used to indicate that the second application window corresponds to a second display device.

According to the projection system provided in this embodiment of this application, a same source device can separately project images of different application windows to the plurality of display devices, so that content of the plurality of application windows can be simultaneously displayed to a viewer through the plurality of display devices, and the viewer can view the content of the different application windows based on a requirement. In this process, the user does not need to frequently walk to the source device to perform an operation on the source device, so that an operation process of the user can be simplified.

In a possible implementation, if the window projection operation includes a first window projection operation, the first window projection operation indicates that the target display device corresponding to the first application window is the first display device. The source device may establish a correspondence between the first application window and the first display device based on the received first window projection operation, and send the display data of the first application window to the first display device based on the correspondence between the first application window and the first display device.

In a possible implementation, the source device receives a projection end operation for the first application window or the first display device, and deletes the correspondence between the first application window and the first display device.

In the foregoing embodiment, when receiving the first window projection operation, the source device establishes the correspondence between the first application window and the first display device. In a period in which the correspondence exists, each time the display data of the first application window is sent, the display data of the first application window may be accurately sent to the first display device based on the correspondence between the first application window and the first display device. When receiving the corresponding projection end operation, the source device may delete the correspondence between the first application window and the first display device in time.

In a possible implementation, the first display device may be further configured to receive a reverse control operation performed by the user on the display data of the first application window, and send the reverse control operation to the source device. The source device may be further configured to receive the reverse control operation from the first display device, and perform the reverse control operation on the first application window.

The foregoing implementation provides a reverse control function. The user may input the reverse control operation on the display device to perform reverse control on the application window in the source device, and does not need to walk to a location of the source device each time to control the application window. This can further facilitate an operation of the user.

In a possible implementation, the reverse control operation sent by the first display device to the source device carries a device identifier of the first display device. The source device may determine, based on the device identifier of the first display device carried in the reverse control operation and the correspondence between the first application window and the first display device, that an object of the reverse control operation is the first application window.

In a possible implementation, before receiving a window projection operation, the source device may further establish a projection channel with each of the plurality of display devices based on device identifiers of the plurality of display devices, where a projection channel corresponding to the source device and the first display device is used to transmit the display data of the first application window sent by the source device to the first display device.

In a possible implementation, the projection system may further include a server. The source device may be communicatively connected to a plurality of display devices through the server. The source device may be specifically configured to send, through the server, the display data of each of the plurality of application windows to the target display device corresponding to each application window. The first display device may be specifically configured to receive the display data of the first application window from the source device through the server.

In the foregoing implementation, the source device sends the display data to the plurality of display devices through the server, and the source device does not need to be located in same space as the plurality of display devices, and does not need to be located in a same local area network. Therefore, the solution provided in this embodiment of this application is applicable to more application scenarios, and an applicable scope of the solution is expanded.

In a possible implementation, the source device establishes and stores a correspondence between the plurality of application windows and the display devices. The source device may be specifically configured to send the display data of the plurality of application windows and the correspondence between the plurality of application windows and the display devices to the server. The server may be configured to send, based on the correspondence between the plurality of application windows and the display devices, the display data of each of the plurality of application windows from the source device to the target display device corresponding to each application window.

In another possible implementation, the source device may be specifically configured to send the display data of the plurality of application windows to the server. The server may be configured to: determine, from the plurality of display devices, the target display device corresponding to each of the plurality of application windows, and establish the correspondence between the plurality of application windows and the display devices; and send, based on the correspondence between the plurality of application windows and the display devices, the display data of each of the plurality of application windows from the source device to the target display device corresponding to each application window.

In the foregoing implementation, the server determines the display device corresponding to each application window, and the server establishes the correspondence between the plurality of application windows and the display devices. The user does not need to specify, on the source device, the display device corresponding to the application window. The user only needs to specify an application window that needs to be projected. Therefore, the operation of the user can be further simplified, and resources of the source device can also be saved.

In a possible implementation, the source device may be further configured to: before receiving a window projection operation, send a device information obtaining request to the server, where the device information obtaining request carries identification information of a device group, and the device group is a device group to which a plurality of display devices pre-connected to the source device belong; and the server may be further configured to send, to the source device based on the identification information the device group that is carried in the device information obtaining request, device information of the plurality of display devices included in the device group, where the device information of the display device includes a device identifier and device parameter information of the display device.

The server sends the device information of the plurality of display devices to the source device, so that the source device can use the device information when establishing the correspondence between the application window and the display device and performing the reverse control operation in a projection process.

According to a second aspect, an embodiment of this application further provides a projection method. The projection method may be applied to a source device, and the source device is communicatively connected to a plurality of display devices. The projection method may include:
receiving a window projection operation input by a user; and
in response to the received window projection operation, sending display data of each of a plurality of application windows running in the source device to a target display device corresponding to each application window.

In a possible implementation, the window projection operation includes a first window projection operation and a second window projection operation, the first window projection operation indicates that a target display device corresponding to a first application window is a first display device in the plurality of display devices, the second window projection operation indicates that a target display device corresponding to a second application window is a second display device in the plurality of display devices, and in response to the received window projection operation, sending the display data of each of the plurality of application windows running in the source device to the target display device corresponding to each application window includes:
in response to the first window projection operation, establishing a correspondence between the first application window and the first display device, and sending display data of the first application window to the first display device based on the correspondence between the first application window and the first display device; and
in response to the second window projection operation, establishing a correspondence between the second application window and the second display device, and sending display data of the second application window to the second display device based on the correspondence between the second application window and the second display device.

In a possible implementation, the correspondence between the first application window and the first display device is represented as a correspondence between a window identifier of the first application window and a device identifier of the first display device.

Alternatively, the correspondence between the first application window and the first display device is represented as a correspondence between the window identifier of the first application window and a channel identifier of a projection channel corresponding to the first display device. The projection channel corresponding to the first display device is used to transmit display data that is of an application window and that is sent by the source device to the first display device.

In a possible implementation, the method may further include:
in response to a received projection end operation for the first application window or the first display device, deleting the correspondence between the first application window and the first display device; and
in response to a received projection end operation for the second application window or the second display device, deleting the correspondence between the second application window and the second display device.

In a possible implementation, the method may further include:
receiving a reverse control operation from the first display device, and performing the reverse control operation on the first application window.

In a possible implementation, receiving the reverse control operation from the first display device, and performing the reverse control operation on the first application window includes:
receiving the reverse control operation from the first display device, and determining, based on the correspondence between the first application window and the first display device, that an object of the reverse control operation is the first application window; and
performing the reverse control operation on the first application window.

In a possible implementation, the method may further include:
before receiving a window projection operation, establishing a projection channel with each of the plurality of display devices, where a projection channel corresponding to the source device and the first display device is used to transmit the display data of the first application window sent by the source device to the first display device.

In a possible implementation, the source device is communicatively connected to the plurality of display devices through a server; and in response to the received window projection operation, sending the display data of each of the plurality of application windows running in the source device to the target display device corresponding to each application window includes:
in response to the received window projection operation, sending, to the server, the display data of the plurality of application windows and a correspondence between the plurality of application windows and display devices, and sending, through the server, the display data of each of the plurality of application windows to the target display device corresponding to each application window; or
in response to the received window projection operation, sending the display data of the plurality of application windows to the server, determining, from the plurality of display devices through the server, the target display device corresponding to each of the plurality of application windows, and sending the display data of each of the plurality of application windows to the target display device corresponding to each application window.

In a possible implementation, the method may further include:
before receiving a window projection operation, sending a device information obtaining request to the server, and receiving device information that is of the plurality of display devices included in a device group and that is returned by the server, where the device information obtaining request carries identification information of the device group, the device group is a device group to which a plurality of display devices pre-connected to the source device belong, and the device information of the display device includes a device identifier and device parameter information of the display device.

According to a third aspect, an embodiment of this application further provides a projection method. The projection method may be applied to a server, and the server is communicatively connected to a source device and a plurality of display devices. The method may include:
receiving display data that is of the plurality of application windows and that is sent by the source device, where the display data of each of the plurality of application windows is sent by the source device based on a received window projection operation; and
sending, based on a correspondence between the plurality of application windows and display devices, the display data of each of the plurality of application windows running on the source device to a target display device corresponding to each application window.

In a possible implementation, the server may establish a correspondence between a first application window and the display device in the following manner, where the first application window is any one of the plurality of application windows.

When the display data of the first application window is received, if the display device corresponding to the first application window is not found in a stored correspondence between an application window and a display device, any display device is selected from display devices in a non-projection state in the plurality of display devices, and a correspondence between the first application window and any selected display device is established.

According to a fourth aspect, an embodiment of this application further provides a projection apparatus. The projection apparatus may be used in a source device, and the source device is communicatively connected to a plurality of display devices. The projection apparatus may include:
a receiving module, configured to receive a window projection operation input by a user; and
a projection module, configured to: in response to the received window projection operation, send display data of each of a plurality of application windows running in the source device to a target display device corresponding to each application window.

In a possible implementation, the window projection operation includes a first window projection operation and a second window projection operation, the first window projection operation indicates that a target display device corresponding to a first application window is a first display device in the plurality of display devices, the second window projection operation indicates that a target display device corresponding to a second application window is a second display device in the plurality of display devices, and the projection module is specifically configured to:
in response to the first window projection operation, establish a correspondence between the first application window and the first display device, and send display data of the first application window to the first display device based on the correspondence between the first application window and the first display device; and
in response to the second window projection operation, establish a correspondence between the second application window and the second display device, and send display data of the second application window to the second display device based on the correspondence between the second application window and the second display device.

In a possible implementation, the projection module may be further configured to:
in response to a received projection end operation for the first application window or the first display device, delete the correspondence between the first application window and the first display device; and
in response to a received projection end operation for the second application window or the second display device, delete the correspondence between the second application window and the second display device.

In a possible implementation, the projection module may be further configured to:
receive a reverse control operation from the first display device, and perform the reverse control operation on the first application window.

In a possible implementation, the projection module may be specifically configured to: receive the reverse control operation from the first display device, determine, based on the correspondence between the first application window and the first display device, that an object of the reverse control operation is the first application window, and perform the reverse control operation on the first application window.

In a possible implementation, the projection module may be further configured to:
before receiving a window projection operation, establish a projection channel with each of the plurality of display devices, where a projection channel corresponding to the source device and the first display device is used to transmit the display data of the first application window sent by the source device to the first display device.

In a possible implementation, the source device is communicatively connected to the plurality of display devices through a server, and the projection module is specifically configured to:
in response to the received window projection operation, send, to the server, the display data of the plurality of application windows and a correspondence between the plurality of application windows and display devices, and send, through the server, the display data of each of the plurality of application windows to the target display device corresponding to each application window; or
in response to the received window projection operation, send the display data of the plurality of application windows to the server, determine, from the plurality of display devices through the server, the target display device corresponding to each of the plurality of application windows, and send the display data of each of the plurality of application windows to the target display device corresponding to each application window.

In a possible implementation, the projection module may be configured to:
before receiving a window projection operation, send a device information obtaining request to the server, and receive device information that is of the plurality of display devices included in a device group and that is returned by the server, where the device information obtaining request carries identification information of the device group, the device group is a device group to which a plurality of display devices pre-connected to the source device belong, and the device information of the display device includes a device identifier and device parameter information of the display device.

According to a fifth aspect, an embodiment of this application further provides a projection apparatus. The projection apparatus may be used in a server, and the server is communicatively connected to a source device and a plurality of display devices. The apparatus may include:
a data receiving module, configured to receive display data that is of the plurality of application windows and that is sent by the source device, where the display data of each of the plurality of application windows is sent by the source device based on a received window projection operation; and
a data sending module, configured to send, based on a correspondence between the plurality of application windows and display devices, the display data of each of the plurality of application windows running on the source device to a target display device corresponding to each application window.

In a possible implementation, the data receiving module may be further configured to establish a correspondence between a first application window and the display device in the following manner, where the first application window is any one of the plurality of application windows.

When the display data of the first application window is received, if the display device corresponding to the first application window is not found in a stored correspondence between an application window and a display device, any display device is selected from display devices in a non-projection state in the plurality of display devices, and a correspondence between the first application window and any selected display device is established.

According to a sixth aspect, an embodiment of this application provides a source device, including a memory and a processor. The memory stores a computer program, and the processor is configured to read and execute the computer program stored in the memory, so that any method provided in the second aspect is performed.

According to a seventh aspect, an embodiment of this application provides a server, including a memory and a processor. The memory stores a computer program, and the processor is configured to read and execute the computer program stored in the memory, so that any method provided in the third aspect is performed.

According to an eighth aspect, an embodiment of this application provides a computer-readable storage medium. The computer-readable storage medium stores computer-executable instructions, and the computer-executable instructions are used to enable a computer to perform any method provided in the second aspect or the third aspect.

According to a ninth aspect, an embodiment of this application provides a computer program product, including computer-executable instructions. The computer-executable instructions are used to enable a computer to perform any method provided in the second aspect or the third aspect.

For technical effects that can be achieved in any one of the second aspect to the ninth aspect, refer to descriptions of beneficial effects in the first aspect. Details are not described herein again.

### BRIEF DESCRIPTION OF DRAWINGS

FIG. 1 is a diagram of a structure of a projection system according to an embodiment of this application;
FIG. 2 is a diagram of projection effect according to an embodiment of this application;
FIG. 3 is a block diagram of a functional structure of a source device according to an embodiment of this application;
FIG. 4 is a block diagram of a functional structure of a display device according to an embodiment of this application;
FIG. 5 is an interaction flowchart of a process of establishing a projection connection according to an embodiment of this application;
FIG. 6 is a diagram of a display interface of a device list of a source device according to an embodiment of this application;
FIG. 7 is a flowchart of a projection method according to an embodiment of this application;
FIG. 8 is a diagram of an interface of a source device in a projection process according to an embodiment of this application;
FIG. 9 is a diagram of another interface of a source device in a projection process according to an embodiment of this application;
FIG. 10 is a diagram of an application window display interface of a source device according to an embodiment of this application;
FIG. 11 is a diagram of another display interface of a device list of a source device according to an embodiment of this application;
FIG. 12 is a diagram of a structure of another projection system according to an embodiment of this application;
FIG. 13 is an interaction flowchart of a registration process of a display device according to an embodiment of this application;
FIG. 14 is an interaction flowchart of a registration process of a source device according to an embodiment of this application;
FIG. 15 is an interaction flowchart of a projection method according to an embodiment of this application;
FIG. 16 is an interaction flowchart of another projection method according to an embodiment of this application;
FIG. 17 is a diagram of another application window display interface of a source device according to an embodiment of this application;
FIG. 18 is a flowchart of a projection method performed by a source device according to an embodiment of this application;
FIG. 19 is a flowchart of a projection method performed by a server according to an embodiment of this application;
FIG. 20 is a diagram of a structure of a projection apparatus according to an embodiment of this application;
FIG. 21 is a diagram of a structure of another projection apparatus according to an embodiment of this application;
FIG. 22 is a diagram of a structure of a source device according to an embodiment of this application; and
FIG. 23 is a diagram of a structure of a server according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are only used to explain specific embodiments of this application, but are not intended to limit this application.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

Projection is a process in which display data of a source device is encoded and then transmitted to a display device for display on the display device. The source device may be a mobile terminal such as a mobile phone, a tablet computer, or a laptop of a user, or may be an electronic device such as a computer. The display data of the source device may be content displayed on a display of the source device, and may include content such as an image and a sound. The display device may be a large display. For example, in a conference room, display data on a laptop of a user may be projected to a large display installed in the conference room. Projection can be used in various fields, such as basic office communication, education, and finance, to provide convenient and effective communication and collaboration methods for people's daily work and learning.

Currently, when content in a plurality of application windows needs to be displayed on a display device, to make a viewer clearly view the content displayed on the display device, a user needs to perform an operation on the source device, and frequently switch between different application windows, so that application windows are displayed on the display device in a changing manner, allowing the viewer to view the content in the plurality of application windows. In this process, the user needs to frequently walk to the source device to perform the operation on the source device, and an operation process is complex.

Based on this, an embodiment of this application provides a projection system. The projection system includes a source device and a plurality of display devices, and the plurality of display devices are communicatively connected to the source device. The source device may send, based on a received window projection operation, display data of each of a plurality of application windows running on the source device to different display devices in the plurality of display devices for display, so that the plurality of display devices display content of different application windows. In the projection system, a same source device can separately project images of different application windows to the plurality of display devices, so that content of the plurality of application windows can be simultaneously displayed to a viewer through the plurality of display devices, and the viewer can view content of different application windows based on a requirement, thereby improving viewing experience of the viewer. In this process, a user does not need to frequently walk to the source device to perform an operation on the source device, so that an operation process of the user can be simplified.

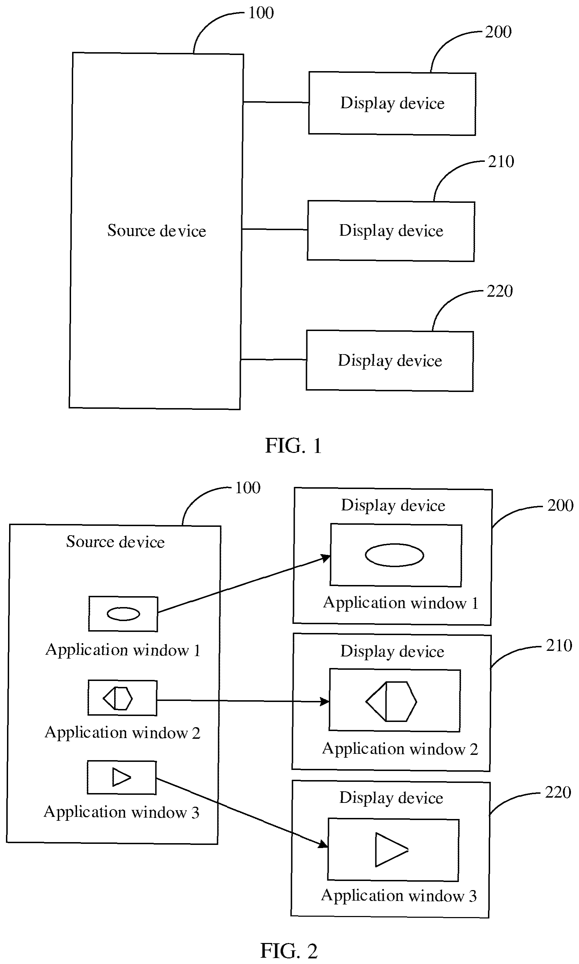

FIG. 1 is an example of a diagram of a projection system according to an embodiment of this application. As shown in FIG. 1, the projection system provided in this embodiment of this application may include a source device 100 and a plurality of display devices. The display devices in FIG. 1 include a display device 200, a display device 210, and a display device 220. In another embodiment, the projection system may include more display devices, or may include fewer display devices. A quantity of display devices is not limited in this embodiment of this application.

The plurality of display devices may be located in a same space or a same local area network. For example, the plurality of display devices may be a plurality of large displays installed in a same conference room or a same classroom. The source device 100 and the plurality of display devices may be located in the same space or the same local area network. The plurality of display devices may be connected to the source device 100 in a wired manner or a wireless manner. When the wired manner is used, the plurality of display devices may be connected to the source device 100 through a network cable or the like. When the wireless manner is used, the plurality of display devices may be connected to the source device 100 in a radio frequency manner, a Wi-Fi manner, or the like.

The source device 100 may send display data of each of the plurality of application windows to corresponding display devices, so that different display devices display content of different application windows. For example, as shown in FIG. 2, the source device 100 may send display data of an application window 1 to the display device 200, so that the display device 200 displays content of the application window 1. The source device 100 may send display data of an application window 2 to the display device 210, so that the display device 210 displays content of the application window 2. The source device 100 may send display data of an application window 3 to the display device 220, so that the display device 220 displays content of the application window 3.

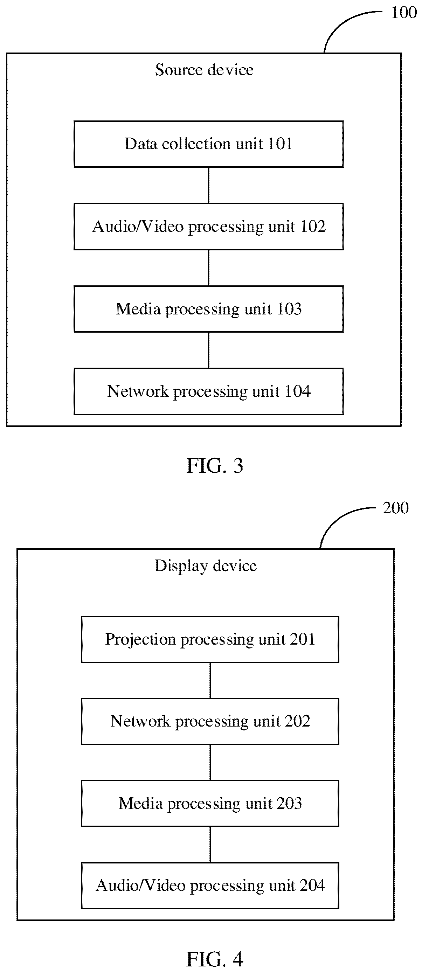

As shown in FIG. 3, to implement the foregoing functions, the source device 100 may include the following functional components: a data collection unit 101, an audio/video processing unit 102, a media processing unit 103, and a network processing unit 104. The data collection unit 101 may be configured to collect display data of an application window running in the source device 100. The audio/video processing unit 102 may be configured to perform encoding processing on an audio stream or a video stream in the display data of the application window, to obtain encoded data of the application window. The media processing unit 103 may be configured to generate a to-be-sent projection data packet based on the encoded data of the application window, where the to-be-sent projection data packet carries a window identifier of the application window. The network processing unit 104 may be configured to send the to-be-sent projection data packet to a corresponding display device based on a correspondence between the application window and the display device. In some embodiments, the network processing unit 104 may be further configured to receive control signaling sent by the display device for the application window.

As shown in FIG. 4, to implement the foregoing functions, the display device 200 may include the following functional components: a projection processing unit 201, a network processing unit 202, a media processing unit 203, and an audio/video processing unit 204. The projection processing unit 201 may be configured to establish a projection channel with the source device 100. The projection channel is used to transmit the control signaling and an audio/video projection data packet. The network processing unit 202 may be configured to receive the audio/video projection data packet sent by the source device 100 through the projection channel. In some embodiments, the network processing unit 202 may be further configured to send the control signaling for the application window to the source device 100. The media processing unit 203 may be configured to parse the received audio/video projection data packet, to obtain the encoded data of the application window. The audio/video processing unit 204 may be configured to decode the encoded data of the application window to obtain an audio stream or a video stream, so that the display device can perform rendering based on the obtained video stream, and display the rendered video stream on a display. For a structure of another display device in the projection system, refer to the structure of the display device 200. Details are not described herein again.

Before performing projection, the source device may first establish projection connections to the plurality of display devices.

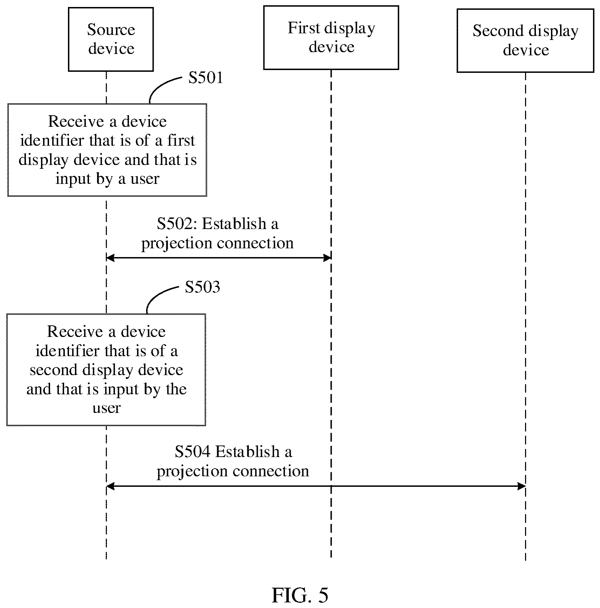

In some embodiments, the source device may receive a device identifier that is of a display device and that is input by the user, and establish a projection connection to each display device based on the device identifier of the display device. For example, as shown in FIG. 5, the process may include the following steps:
S501: The source device receives a device identifier that is of a first display device and that is input by the user.
S502: The source device establishes a projection connection to the first display device.

A projection application is installed on the source device. The user may input, on the source device through the projection application, a device identifier of a to-be-added display device. The source device may establish a projection connection to a corresponding display device based on the device identifier input by the user. In an optional embodiment, the device identifier of the display device may be a projection code of the display device. The projection code of the display device may carry network address information of the display device. The network address information of the display device may be an internet protocol (internet protocol, IP) address of the display device in a local area network. The source device may establish a connection to the display device based on the IP address. The projection code of the display device may be marked or displayed on the display of the display device. For example, the projection code of the display device may be displayed in an upper left corner or an upper right corner of the display, to facilitate obtaining and use by the user.

After the projection application on the source device runs, the user may choose to add a device, and then input a projection code of the first display device. The projection application on the source device receives the projection code that is of the first display device and that is input by the user, parses the projection code to obtain an IP address included in the projection code, establishes a projection connection to the first display device based on the IP address, and establishes a projection channel between the source device and the first display device.

In another optional embodiment, the device identifier that is of the display device and that is input by the user may alternatively be a device number of the display device. After receiving the device number that is of the display device and that is input by the user, the source device may send the device number to the plurality of display devices in the projection system by using a broadcast message. Each display device that receives the broadcast message compares the device number in the broadcast message with a device number of the display device. A display device whose device number is consistent with the device number of in the broadcast message sends a response message to the source device. The source device establishes a projection connection and a projection channel with the display device that sends the response message. If the user inputs a device number of the first display device, the first display device sends the response message to the source device, and the source device establishes a projection connection and a projection channel with the first display device.

S503: The source device receives a device identifier that is of a second display device and that is input by the user.

S504: The source device establishes a projection connection to the second display device.

The first display device and the second display device may be any two of display devices included in the projection system.

The foregoing process is repeated. The source device may separately establish a projection connection to the plurality of display devices included in the projection system, and establish projection channels. Each projection channel has a channel identifier, and each projection channel corresponds to one display device.

In some other embodiments, the source device or the projection application on the source device may alternatively automatically search for a nearby display device within a specified range by using a device search function, and establish a connection and a projection channel with each searched display device.

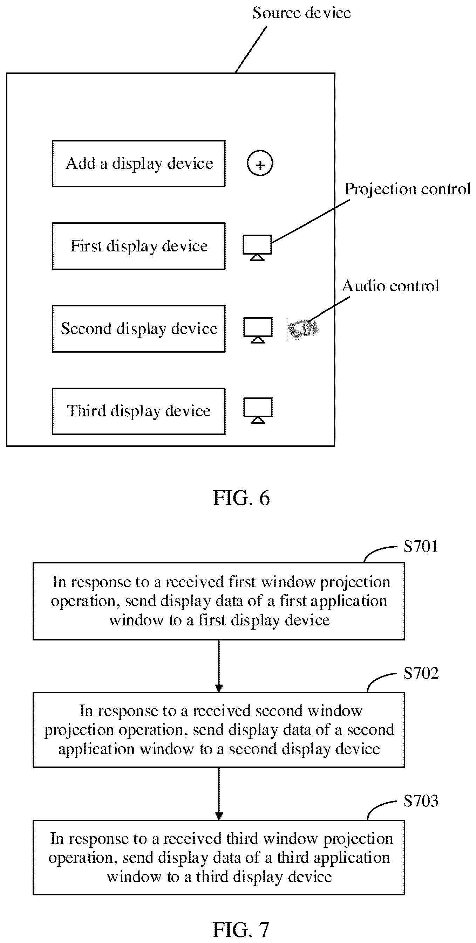

The source device may further generate a device list, and the device list may include a plurality of display devices that have established connections. As shown in FIG. 6, the device list may be displayed on the display of the source device. An icon of each display device may be displayed in a display interface of the device list. A corresponding projection control may be further displayed for each display device. The projection control may be displayed on a right side of an icon of a corresponding display device. In an optional embodiment, if a display device has an audio play component, a corresponding audio control may be further displayed on a right side of an icon of the display device. For example, a corresponding audio control is disposed beside the second display device shown in FIG. 6. In another embodiment, the display interface of the device list may alternatively display only an icon of each display device, and does not display a corresponding projection control and a corresponding audio control.

The source device may project, to a display device selected by the user based on a window projection operation input by the user, display data of an application window running on the source device. In some embodiments, the window projection operation may include a plurality of window projection operations input by the user. For example, as shown in FIG. 7, in this process, the projection method performed by the source device may include the following steps:
S701: In response to a received first window projection operation, send display data of a first application window to a first display device.

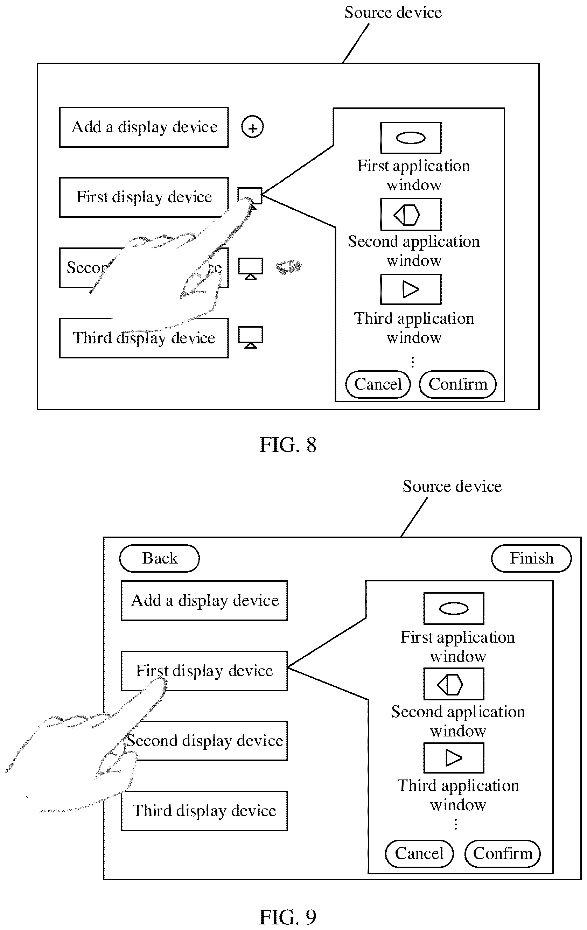

During projection, the user may select a target display device in the display interface of the device list. For example, as shown in FIG. 8, the user may click a projection control on a right side of the first display device. The source device receives an operation of selecting the first display device by the user, uses the first display device as the target display device, and displays a window selection interface. The window selection interface displays a plurality of application windows currently running on the source device, and the user may select, from the plurality of application windows, an application window to be projected to the first display device. For example, the user may select the first application window, then click a "Confirm" button, and input the first window projection operation. In some embodiments, as shown in FIG. 9, if a projection control corresponding to each display device is not displayed on the display interface of the device list, the user may click an icon of a selected target display device.

The source device receives the first window projection operation input by the user, and determines that the target display device specified in the first window projection operation is the first display device. The specified target application window is the first application window. The source device may establish and store a correspondence between the first application window and the first display device, and send the display data of the first application window to the first display device based on the correspondence. A correspondence between an application window and a display device may also be referred to as a binding relationship between the application window and the display device.

In some embodiments, each application window has a window identifier, and the window identifier may also be referred to as a window identity (identity, ID). When establishing a projection channel with each display device, the source device allocates a channel identifier to each projection channel. The channel identifier may be a number of the projection channel. The correspondence between the application window and the display device may be a correspondence between a window identifier of the application window and a channel identifier of a projection channel corresponding to the display device. In some other embodiments, the correspondence between the application window and the display device may alternatively be a correspondence between the window identifier of the application window and a device identifier of the display device.

After establishing the correspondence between the first application window and the first display device, the source device may obtain display information of the first application window. The display information of the first application window may include an image or a video stream that is of the first application window and that is obtained through screen capture, and may further include an audio stream played in the first application window. The source device sends the display information of the first application window to the first display device based on the correspondence between the first application window and the first display device, so that the first display device displays content of the first application window based on the display information of the first application window.

For example, after obtaining the display information of the first application window, the source device may generate, through the media processing unit, a projection data packet including the display information of the first application window. The projection data packet carries a window identifier of the first application window. The media processing unit transmits the generated projection data packet to the network processing unit. In some embodiments, the network processing unit determines, based on the window identifier of the first application window in the projection data packet and the correspondence between the window identifier of the application window and the channel identifier of the projection channel, that the projection channel having the correspondence with the first application window is the projection channel corresponding to the first display device, and sends the projection data packet to the first display device through the projection channel. In some other embodiments, the network processing unit determines, based on the window identifier of the first application window in the projection data packet and the correspondence between the window identifier of the application window and the device identifier of the display device, that the first display device has the correspondence with the first application window, and may send the projection data packet to the first display device through the projection channel between the display device and the first display device, or may send the projection data packet to the first display device through a data interface connected to the first display device.

The first display device receives the projection data packet sent by the source device, obtains the display information of the first application window in the projection data packet, and displays the content of the first application window based on the video stream in the display information of the first application window. In an optional embodiment, the first display device may further play audio of the first application window based on the audio stream in the display information of the first application window.

In some embodiments, the user may alternatively select the plurality of application windows, send display information of the plurality of application windows to the first display device, and display content of the plurality of application windows through the first display device.

S702: In response to a received second window projection operation, send display data of a second application window to a second display device.

S703: In response to a received third window projection operation, send display data of a third application window to a third display device.

After inputting the first window projection operation, the user may continue to select the target display device and the target application window in the display interface of the device list, and perform the window projection operation for a plurality of times. For example, the user may input the second window projection operation. The source device receives the second window projection operation input by the user, and determines that the second window projection operation indicates to project the second application window to the second display device. Therefore, the display data of the second application window is obtained, and the display data of the second application window is sent to the second display device, so that the second display device displays content of the second application window. The user may further input the third window projection operation. The source device receives the third window projection operation input by the user, and determines that the third window projection operation indicates to project the third application window to the third display device. Therefore, the display data of the third application window is obtained, and the display data of the third application window is sent to the third display device, so that the third display device displays content of the third application window. For a processing process in which the source device performs the projection operation on the second window and the projection operation on the third window, refer to the processing process in which the source device performs the projection operation on the first window. Details are not described herein again.

In some other embodiments, the window projection operation input by the user on the source device may specify target display devices respectively corresponding to the plurality of application windows. For example, the user may specify, on the source device, the plurality of application windows and the target display device corresponding to each application window, and then click a "Complete" button to input the window projection operation. For example, as shown in FIG. 9, the user clicks an icon of the first display device in the display interface of the device list. The source device uses the first display device as the target display device, and displays the window selection interface. The user may select, in the window selection interface, the first application window to be projected to the first display device, and click a "Confirm" button. The source device continues to display the device list. Then, the user may continue to click an icon of the second display device, select, in the window selection interface, the second application window to be projected to the second display device, and click the "Confirm" button. The user may continue to click an icon of the third display device, select, in the window selection interface, the third application window to be projected to the third display device, and click the "Confirm" button. After all options are selected, the user may click the "Complete" button to complete the window projection operation. After receiving the window projection operation input by the user, the source device may establish and store a correspondence between the plurality of application windows and display devices, and send, based on the correspondences, the display data of each of the plurality of application windows to a display device corresponding to each application window.

Projection effect obtained by using the foregoing projection process is shown in FIG. 2. The first display device may display the content of the first application window in the source device. The second display device may display the content of the second application window in the source device. The third display device may display the content of the third application window in the source device.

In some embodiments, based on selection of the user, the source device may send the display information of the plurality of application windows to a same display device for display, or the source device may send display information of a same application window to a plurality of display devices for display. For example, after the source device sends the display information of the second application window to the second display device for display, if the source device receives a fourth window projection operation input by the user, and the fourth window projection operation indicates to project the second application window to a fourth display device, the source device may send the display information of the second application window to the fourth display device, so that the fourth display device displays the content of the second application window based on the display information of the second application window.

In some embodiments, when displaying the content in the application window of the source device, the display device may receive an operation instruction input by the user, and perform reverse control on the source device based on the operation instruction of the user, to complete service interaction between the display device and the source device. The operation instruction that is for the application window and that is input by the user on the display device may be referred to as a reverse control operation.

The first display device is used as an example. A touchscreen may be disposed on the first display device, and the first display device may receive, through the touchscreen, the reverse control operation input by the user. For example, the reverse control operation input by the user may be a click operation on an operation button. For example, the user may click, by touching the touchscreen, the operation button displayed on the first display device. The first display device receives the click operation of the user through the touchscreen, obtains coordinate information of the click operation, and sends a reverse control operation including the coordinate information of the click operation to the source device.

In an optional embodiment, the reverse control operation may further carry a device identifier of the first display device. The source device receives the reverse control operation sent by the first display device, obtains the device identifier of the first display device carried in the reverse control operation, and determines, based on the correspondence between the device identifier of the display device and the window identifier of the application window, that the first display device corresponds to the first application window. In another optional embodiment, the reverse control operation may further carry a channel identifier of a projection channel corresponding to the first display device. The source device receives the reverse control operation sent by the first display device, and obtains the channel identifier of the projection channel carried in the reverse control operation. The source device may determine, based on the channel identifier, that the reverse control operation is sent by the first display device. The source device may determine, based on the correspondence between the channel identifier of the projection channel and the window identifier of the application window, that the reverse control operation corresponds to the first application window.

The source device displays the first application window, obtains the coordinate information of the click operation carried in the reverse control operation, uses the coordinate information as coordinate information of the first display device, converts the coordinate information of the first display device into coordinate information of the source device based on a coordinate mapping relationship between the source device and the first display device, determines an operation button corresponding to the coordinate information of the source device in the first application window, executes an operation command corresponding to the operation button, performs a reverse control response, and sends an execution result to the first display device for display. The coordinate mapping relationship between the source device and the first display device may be determined by the source device based on a pre-obtained resolution of the first display device and a resolution of the source device. The resolution of the first display device may be input by the user to the source device, or may be obtained from the first display device when the source device establishes the projection connection to the first display device.

In some other embodiments, if the display device does not include a touchscreen, the display device may alternatively receive, through another input component, an operation instruction input by the user. The another input component may include a mouse, a stylus, and the like. Examples are not listed one by one herein.

In some embodiments, if the source device receives, in a same time period, reverse control operations sent by the plurality of display devices, the source device may perform a first reverse control operation with an earliest receiving moment in the plurality of reverse control operations, ignore another reverse control operation, and send waiting prompt information to the display device that sends the another reverse control operation. A receiving moment of each reverse control operation is a moment at which the source device receives the reverse control operation. The another reverse control operation is a reverse control operation other than the first reverse control operation in the plurality of received reverse control operations. After receiving the waiting prompt information, the display device may display the waiting prompt information, to prompt the user that the source device is performing the reverse control operation at this time. The reverse control operation is input after waiting for specified duration. That the plurality of reverse control operations are received in a same time period means that a time interval between receiving moments of the plurality of reverse control operations is short and can be almost ignored. For example, after receiving the first reverse control operation sent by the first display device, the source device has not yet processed the first reverse control operation. A second reverse control operation sent by the second display device is further received. For example, a length of the same time period may be 1 µs or 1 ns.

For example, within the same time period, if the source device successively receives the first reverse control operation sent by the first display device and the second reverse control operation sent by the second display device, the source device performs the first reverse control operation sent by the first display device, ignores the second reverse control operation sent by the second display device, and sends the waiting prompt information to the second display device, to prompt the user of the second display device to wait for specified duration before inputting the reverse control operation.

In some other embodiments, if the source device receives, in the same time period, the reverse control operations sent by the plurality of display devices, the source device may sequentially perform the plurality of received reverse control operations based on a time sequence of receiving moments of the reverse control operations. For example, the source device may preferentially respond to the first received reverse control operation, and send prompt information to another display device, to prompt the user that the received reverse control operations are being sequentially performed, and ask the user to wait for the source device to feed back an execution result. There is no need to input the reverse control operation again.

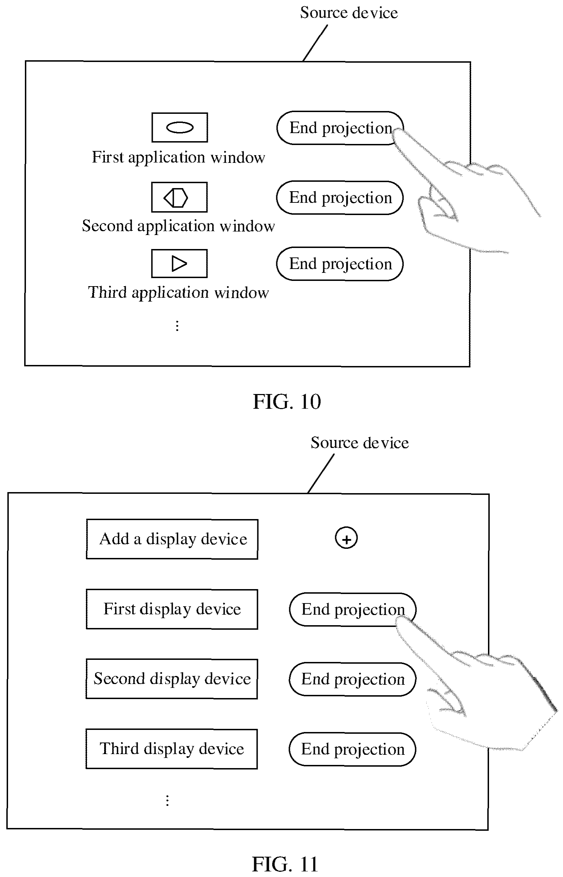

When content in an application window does not need to be projected for display, the user may end projection display of the application window on the source device. In some embodiments, as shown in FIG. 10, in the application window display interface of the source device, each application window in the projection state correspondingly displays an "End projection" button, and the "End projection" button may be displayed on a right side of a corresponding application window. It is assumed that the first application window may end projection display. The user may click an "End projection" button on a right side of the first application window in the application window display interface of the source device. The source device receives the projection end operation input by the user for the first application window, in responds to the projection end operation, deletes the correspondence between the first application window and the first display device, stops collecting the display data of the first application window, and ends projection display of the first application window. Similarly, if the user clicks an "End projection" button on a right side of the second application window, in response to the projection end operation for the second application window, the source device deletes the correspondence between the second application window and the second display device, stops collecting the display data in the second application window, and ends projection display of the second application window.

In some other embodiments, the user may alternatively end projection display of the application window by performing an operation on the display device in the display interface of the device list. As shown in FIG. 11, in the display interface of the device list of the source device, each display device that is in the projection state correspondingly displays an "End projection" button, and the "End projection" button may be displayed on a right side of the corresponding display device. It is assumed that the first application window may end projection display. The user may click, in the display interface of the device list of the source device, the "End projection" button on the right side of the first display device corresponding to the first application window. The source device receives the projection end operation input by the user for the first display device, in response to the projection end operation, deletes the correspondence between the first application window and the first display device, and stops collecting the display data of the first application window. Similarly, if the user clicks the "End projection" button on the right side of the second display device, in response to the projection end operation for the second display device, the source device deletes the correspondence between the second application window and the second display device, stops collecting the display data in the second application window, and end projection display of the second application window.

After ending projection display of the first application window, the first display device may be further configured to perform projection display of another application window. For example, the first display device may be configured to display content of a fourth application window. In this process, the source device may establish a correspondence between the fourth application window and the first display device in response to a new window projection operation input by the user, and send display data of the fourth application window to the first display device based on the correspondence between the fourth application window and the first display device, so that the first display device displays the content in the fourth application window. For a specific process, refer to the foregoing process of projecting the content in the window of the first application to the first display device. Details are not described herein again.

The projection method performed by the source device may be performed by a projection application installed in the source device.

In the foregoing embodiment, the source device may send, based on the received window projection operation, the display data of each of the plurality of application windows running in the source device to different display devices in the plurality of display devices for display. Therefore, content in the plurality of application windows in the source device may be simultaneously displayed to the viewer through the plurality of display devices, so that the viewer views content in different application windows based on a requirement. In addition, the user may input an operation instruction for the application window on the display device, and reversely control, through the display device, the source device to process the application window, so that the application window can be flexibly controlled.

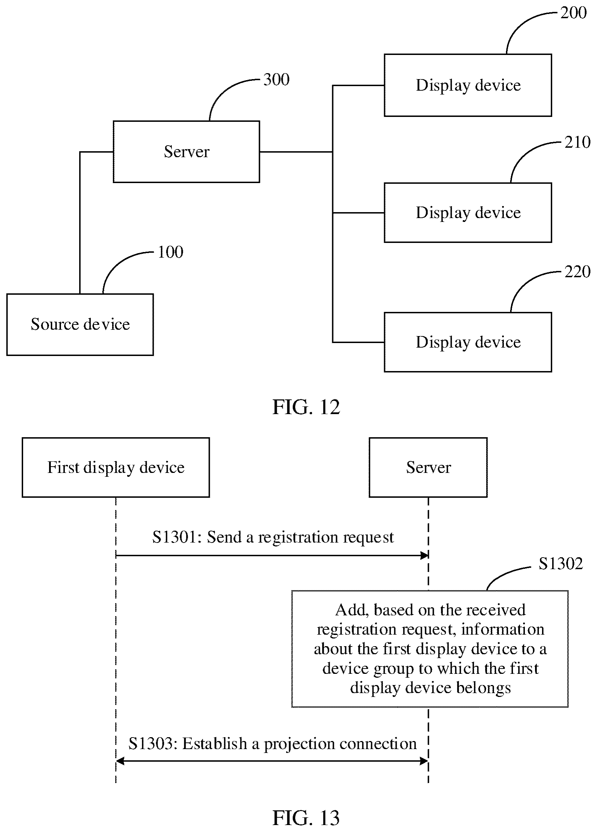

In addition to the projection system provided in the foregoing embodiment, in some other embodiments, the source device may alternatively be connected to the plurality of display devices through a server. As shown in FIG. 12, the projection system may include a source device 100, a server 300, and a plurality of display devices. The display devices in FIG. 12 include a display device 200, a display device 210, and a display device 220. In another embodiment, the projection system may include more display devices, or may include fewer display devices. A quantity of display devices is not limited in this embodiment of this application.

The source device 100 is communicatively connected to the plurality of display devices through the server 300, and sends display data of each of a plurality of application windows to the plurality of display devices through the server 300. The server 300 may be a cloud server, and the server 300 may communicate with the source device 100 and the plurality of display devices through a network. In a projection process, the source device may send the display data of the plurality of application windows and a correspondence between the plurality of application windows and display devices to the server 300. The server 300 may send, based on the correspondence between the plurality of application windows and the display devices, the display data of each of the plurality of application windows to a target display device corresponding to each application window
The server 300 stores device information of display devices included in a plurality of device groups, and each device group may include a plurality of display devices located in same space or in a same local area network. Each device group has identification information, and each display device in the device group has device information. For example, identification information of a device group is a device group A. It is assumed that the device group A includes a display device 200, a display device 210, and a display device 220. The display device 200, the display device 210, and the display device 220 may be located in a conference room or a classroom. Device information of any display device in the device group A may include a device identifier and device parameter information of the display device. The device identifier of the display device may be a projection code or a device number of the display device, or may be a channel identifier of a projection channel corresponding to the display device, for example, a number of the projection channel. The projection channel corresponding to the display device is a projection channel between the server 300 and the display device, and each display device corresponds to one projection channel. For example, for the display device 200, the server 300 may send display data of an application window to the display device 200 through a projection channel corresponding to the display device 200. The device parameter information of the display device may include parameter information such as a resolution of the display device and whether the display device has an audio processing function.

The projection channel corresponding to the display device may be established in a registration process of the display device. FIG. 13 shows an example of a registration process of the first display device. The first display device may be any one of the display device 200, the display device 210, and the display device 220. As shown in FIG. 13, the registration process of the display device may include the following steps.

S1301: A first display device sends a registration request to a server.

After being powered on, the first display device may initiate the registration request to the server. The registration request carries identification information of a device group to which the first display device belongs. When a plurality of display devices included in the device group are located in a same classroom, the identification information of the device group may be ID information of the classroom. The registration request may further carry information about the first display device, for example, a device name, an IP address, a device identifier, and device capability information of the first display device. The device capability information may include information such as whether the device has an audio play function.

S1302: The server adds, based on the received registration request, the information about the first display device to the device group to which the first display device belongs.

The server obtains the identification information of the device group carried in the registration request, adds, based on the identification information of the device group, the information about the first display device carried in the registration request into the device group to which the first display device belongs, and establishes and stores information about a group relationship between the first display device and the device group to which the first display device belongs.

S1303: The server establishes a projection connection to the first display device.

The server establishes the projection channel with the first display device, stores a channel identifier of the projection channel corresponding to the first display device, and maintains information about the group relationship between the first display device and the device group to which the first display device belongs. In this case, the first display device is successfully registered.

For a registration process of another display device, refer to the registration process of the first display device. Details are not described herein again. For the device group A, the device group A includes a plurality of successfully registered display devices that belong to the device group A, and each display device has a projection capability.

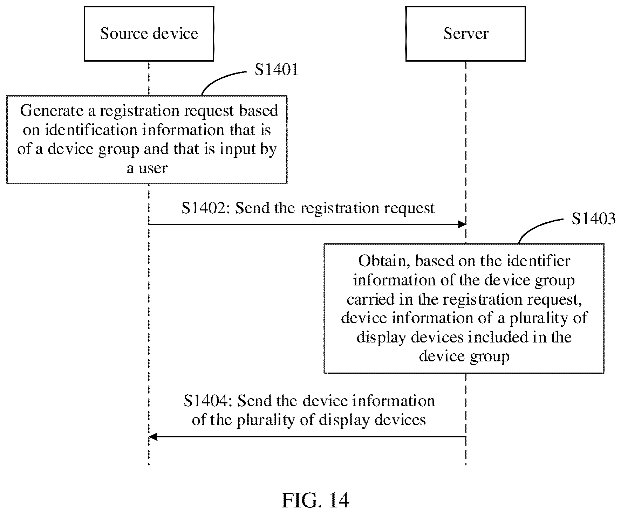

The source device 100 may obtain, through registration, device information of each display device on which projection is to be performed. FIG. 14 shows an example of a registration process of a source device. As shown in FIG. 14, the registration process of the source device may include the following steps.

S1401: The source device generates a registration request based on identification information that is of a device group and that is input by a user.

When projection needs to be performed, the user may open a projection application installed on the source device, and input identification information of a device group in the projection application. The identification information of the device group may be a classroom ID of a classroom on which projection is to be performed. The source device receives the identification information that is of the device group and that is input by the user, and generates a registration request including the identification information of the device group.

S1402: The source device sends the registration request to a server.

The registration request carries the identification information of the device group, and the identification information of the device group may be the classroom ID input by the user. The registration request page may be referred to as a device information obtaining request.

S1403: The server obtains, based on the identification information of the device group carried in the registration request, device information of a plurality of display devices included in the device group.

The server receives the registration request sent by the source device, obtains the identification information of the device group in the registration request, and searches, based on the identification information of the device group, for a quantity of display devices included in the device group and device information of each display device. The server may further store a correspondence between the source device and the device group based on the identification information of the device group in the registration request.

S1404: The server sends the device information of the plurality of display devices to the source device.

The device information of the display device may be a device identifier of the display device or a channel identifier of a projection channel corresponding to the display device. For example, the device identifier of the display device may be a projection code of the display device. The server may further send information such as the quantity of display devices included in the device group and a resolution of each display device to the source device. The source device may generate a device list based on the information returned by the server. A quantity of display devices included in the device list is equal to a quantity of display devices returned by the server. The source device may further store a coordinate mapping relationship between the source device and each display device based on the resolution of each display device. In this case, the source device is successfully registered.

In some embodiments, if the server does not find the device group based on the identification information of the device group carried in the registration request, or finds that the quantity of display devices included in the device group is 0, the server may return a registration failure message to the source device. The registration failure message may carry a failure cause, for example, no device group is found or a found device group is empty.

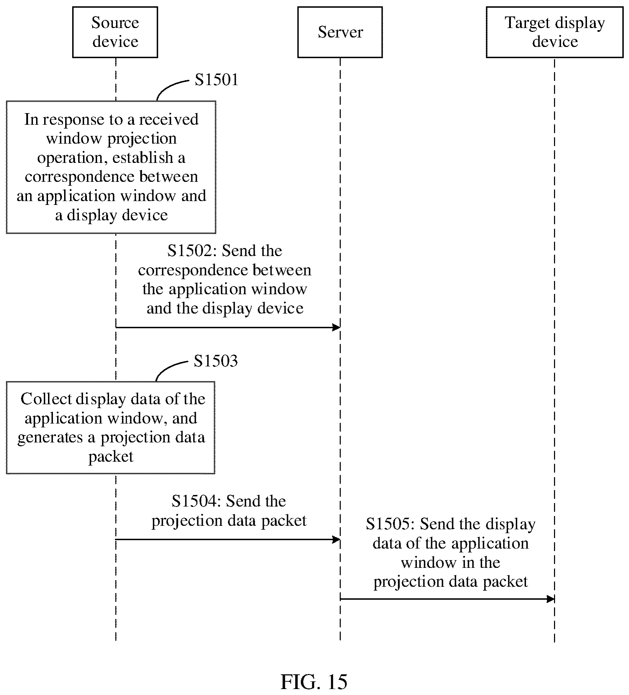

After the source device is successfully registered, the content in the application window may be projected to the display device in the device list for display. In some embodiments, as shown in FIG. 15, the projection process may include the following steps.

S1501: In response to a received window projection operation, a source device establishes a correspondence between an application window and a display device.

The source device receives the window projection operation performed by a user by selecting a target display device in a display interface of a device list, selects, in an application window display interface, a to-be-projected application window, obtains device information of the target display device, and establishes, based on a window identifier of the to-be-projected application window and the device information of the target display device, a correspondence between the to-be-projected application window and the target display device.

S1502: The source device sends the correspondence between the application window and the display device to a server.

The server stores the correspondence that is between the to-be-projected application window and the target display device and that is sent by the source device.

S1503: The source device collects display data of the application window, and generates a projection data packet.

After receiving the window projection operation input by the user, the source device may collect the display data of the to-be-projected application window, and generate the projection data packet including the display data of the to-be-projected application window and the window identifier of the to-be-projected application window. For a process in which the source device generates the projection data packet, refer to the process in which the source device generates the projection data packet in response to the received projection operation on the first window in step S701. Details are not described herein again.

S1504: The source device sends the projection data packet to the server.

S1505: The server sends the display data of the application window in the projection data packet to the target display device.

The server receives the projection data packet sent by the source device, may determine the target display device based on the window identifier that is of the application window and that is carried in the projection data packet and the stored correspondence between the application window and the display device, and sends, to the target display device, the display data that is of the application window and that is carried in the projection data packet.

The correspondence between the application window and the display device is represented as a correspondence between the window identifier of the application window and the device information of the display device. In some embodiments, if the device information of the display device is a device identifier of the display device, the server may determine, based on the window identifier of the application window carried in the projection data packet and the correspondence between the application window and the display device, the target display device corresponding to the to-be-projected application window, and send the display data of the application window to the target display device through a projection channel corresponding to the target display device. In some other embodiments, if the device information of the display device is a channel identifier of the projection channel corresponding to the display device, the server may determine, based on the window identifier that is of the application window and that is carried in the projection data packet and the correspondence between the application window and the display device, a channel identifier of a target projection channel corresponding to the to-be-projected application window, and send the display data of the application window to the target display device through the target projection channel.

The user may input a plurality of window projection operations on the source device, and the source device may repeat the foregoing process, and separately project content of a plurality of application windows to a plurality of display devices based on the plurality of received window projection operations. A quantity of times that the user can initiate the window projection operation is related to a quantity of display devices obtained when the source device is registered.

In this embodiment, the display device may also perform reverse control on the source device based on an operation instruction input by the user. The target display device shown in FIG. 15 is used as an example. The target display device receives a click operation of the user, obtains coordinate information of the click operation, generates a reverse control operation including the coordinate information of the click operation and the device information of the target display device, and sends the reverse control operation to the server. The server forwards the received reverse control operation to the source device. The source device determines, based on the device information of the target display device carried in the reverse control operation and the stored correspondence between the window identifier of the application window and the device information of the display device, the application window corresponding to the target display device. The source device displays the application window, obtains the coordinate information of the click operation in the reverse control operation, uses the coordinate information as coordinate information of the target display device, converts the coordinate information of the target display device into coordinate information of the source device based on a coordinate mapping relationship between the source device and the target display device, determines an operation button corresponding to the coordinate information of the source device in the application window, executes an operation command corresponding to the operation button, and performs a reverse control response.

If the source device receives, in a same time period, reverse control operations sent by the plurality of display devices, for a processing manner of the reverse control operations, refer to the foregoing processing manner in which the source device receives the reverse control operations sent by the plurality of display devices. Details are not described herein again.

When receiving a projection end operation input by the user for an application window, the source device may delete a correspondence between the application window and the display device, stop collecting display data of the application window, and stop sending a projection data packet of the application window to the server. When receiving a projection end operation input by the user for a display device, the source device may determine an application window corresponding to the display device, stop collecting display data of the application window, stop sending a projection data packet of the application window to the server, and delete a correspondence between the display device and the application window.

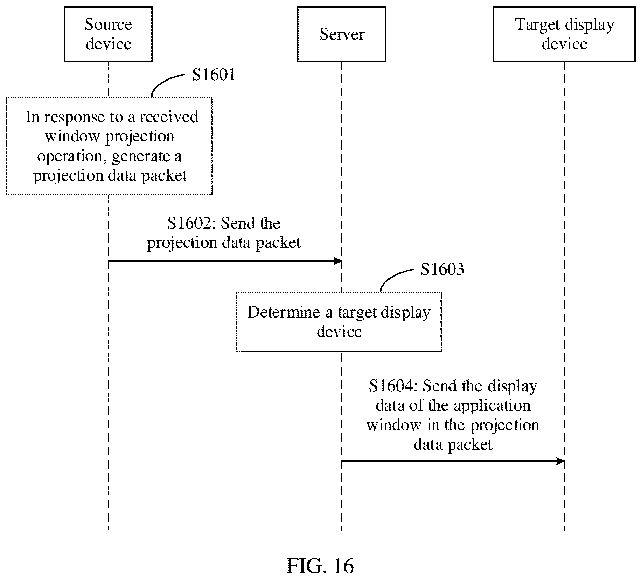

In some other embodiments, projection of the application window may alternatively be implemented by using a projection process shown in FIG. 16. As shown in FIG. 16, the projection process may include the following steps.

S1601: In response to a received window projection operation, a source device generates a projection data packet.

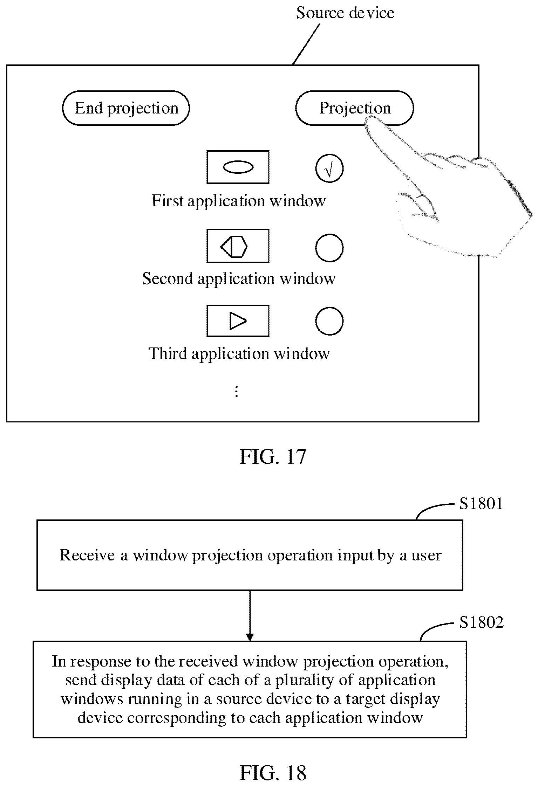

In some embodiments, a user may input the window projection operation in an application window display interface. As shown in FIG. 17, a plurality of application windows are displayed in the application window display interface. The user may select, from the plurality of application windows, one or more to-be-projected application windows, click a "Projection" button, and input the window projection operation. After receiving the window projection operation input by the user, the source device may collect display data of a to-be-projected application window, and generate a projection data packet including display data of the to-be-projected application window and a window identifier of the to-be-projected application window.

S1602: The source device sends the projection data packet to a server.

S1603: The server determines a target display device.

S1604: The server sends the display data of the application window in the projection data packet to the target display device.

The server receives the projection data packet sent by the source device, obtains the window identifier that is of the to-be-projected application window and that is carried in the projection data packet, and determines whether the projection data packet is a 1^{st} projection data packet of the to-be-projected application window. The server may determine, by searching whether device information of the display device corresponding to the window identifier of the application window is stored, whether the projection data packet is the 1^{st} projection data packet of the to-be-projected application window. If the server stores the device information of the target display device corresponding to the window identifier of the application window, it indicates that the projection data packet is not the 1^{st} projection data packet of the to-be-projected application window. The display data of the to-be-projected application window may be directly obtained from the projection data packet and sent to a target display device corresponding to the application window. If the server does not store the device information of the target display device corresponding to the window identifier of the application window, it indicates that the projection data packet is the 1^{st} projection data packet of the to-be-projected application window. In this case, the server may select the target display device from display devices in a non-projection state.

For example, the server may determine a device group corresponding to the source device, and determine a projection state of each display device included in the device group. The projection state of the display device may include a projection state and the non-projection state. The projection state means that the display device is receiving and displaying content of an application window. The non-projection state means that the display device is currently in an idle state, and does not receive or display content of any application window.

The server finds a display device in the non-projection state from the plurality of display devices included in the device group, randomly selects a display device from the display devices in the non-projection state as a target display device corresponding to the to-be-projected application window, and establishes a correspondence between the to-be-projected application window and the target display device based on the window identifier of the to-be-projected application window and the device information of the target display device, so that when a projection data packet of the application window is subsequently received, the server forwards the projection data packet to the target display device.

After establishing the correspondence between the to-be-projected application window and the target display device, the server may obtain, from the projection data packet, the display data of the to-be-projected application window, and send the display data to the target display device corresponding to the application window.

The user may input a plurality of window projection operations on the source device. The source device and the server may repeat the foregoing process, and separately project content of a plurality of application windows to a plurality of display devices based on the plurality of received window projection operations. Before a projection end operation is sent, a quantity of times that the user may initiate the window projection operation is less than or equal to a quantity of display devices included in the device group corresponding to the source device.

In this embodiment, the display device may also perform reverse control on the source device based on an operation instruction input by the user. The target display device shown in FIG. 16 is used as an example. The target display device receives a click operation of the user, obtains coordinate information of the click operation, generates a reverse control operation including the coordinate information of the click operation, the window identifier of the application window, and the device information of the target display device, and sends the reverse control operation to the server. The server forwards the received reverse control operation to the source device. The source device displays a corresponding application window based on the window identifier that is of the application window and that is carried in the reverse control operation, obtains the coordinate information of the click operation in the reverse control operation and the device information of the target display device, uses the coordinate information as coordinate information of the target display device, converts the coordinate information of the target display device into coordinate information of the source device based on a coordinate mapping relationship between the source device and the target display device, determines an operation button corresponding to the coordinate information of the source device in the application window, executes an operation command corresponding to the operation button, and performs a reverse control response.

When content in an application window does not need to be projected for display, the user may end projection display of the application window on the source device. In some embodiments, in an application window display interface shown in FIG. 17, the user may select any application window, click an "End projection" button, and input a projection end operation for the application window. When receiving a projection end operation input by the user for an application window, the source device stops collecting display data of the application window, and stops sending a projection data packet of the application window to the server. In addition, the source device sends the projection end request to the server, where the projection end request carries a window identifier of the application window whose projection is to be ended. The server receives a projection end request sent by the source device, and deletes a correspondence between the application window and the display device based on the window identifier that is of the application window whose projection is to be ended and that is carried in the projection end request.

In this embodiment, the server determines the display device corresponding to each application window, and the server establishes the correspondence between the plurality of application windows and the display devices. The user does not need to specify, on the source device, the display device corresponding to the application window. The user only needs to specify an application window that needs to be projected. Therefore, the operation of the user can be further simplified, and resources of the source device can also be saved.

In the foregoing embodiment, as shown in FIG. 18, the projection method performed by the source device may include the following steps.

S1801: Receive a window projection operation input by a user.

S1802: In response to the received window projection operation, send display data of each of a plurality of application windows running in the source device to a target display device corresponding to each application window.

In some embodiments, the source device may establish a correspondence between the plurality of application windows and display devices based on the received window projection operation, and send, based on the correspondences, display data of each of the plurality of application windows to the target display device corresponding to each application window.

In some other embodiments, the source device may send, through the server, the display data of each of the plurality of application windows to the target display device corresponding to each application window.

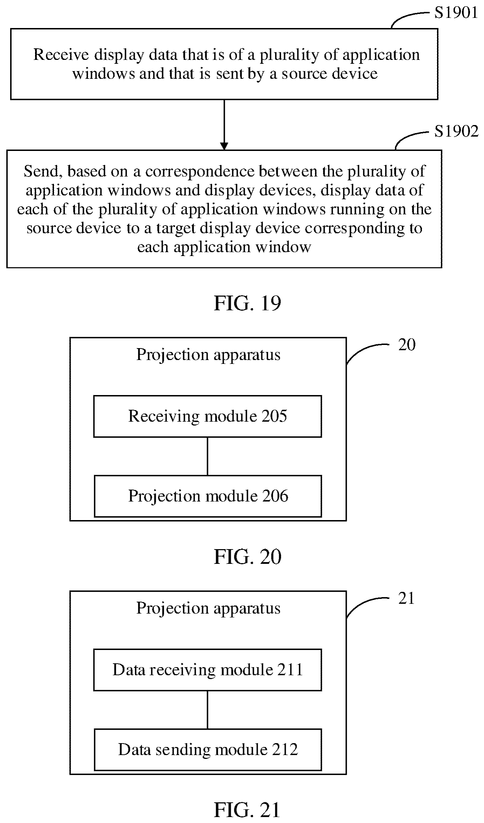

When the source device sends, through the server, the display data of each of the plurality of application windows to the target display device corresponding to each application window, as shown in FIG. 19, the projection method performed by the server may include the following steps.

S1901: Receive the display data that is of the plurality of application windows and that is sent by the source device.

The display data of each of the plurality of application windows is sent by the source device based on the received window projection operation.

S1902: Send, based on a correspondence between the plurality of application windows and display devices, display data of each of the plurality of application windows running on the source device to a target display device corresponding to each application window.

In some embodiments, the correspondence between the plurality of application windows and the display devices may be sent by the source device to the server. In some other embodiments, the server may establish the correspondence between the first application window and the display device in the following manner. When the display data of the first application window is received, if the display device corresponding to the first application window is not found in a stored correspondence between an application window and a display device, any display device is selected from display devices in a non-projection state in the plurality of display devices, and a correspondence between the first application window and any selected display device is established. The first application window is any one of the plurality of application windows.

With reference to the foregoing method embodiments, an embodiment of this application further provides a projection apparatus. The apparatus may be used in a source device. In some embodiments, as shown in FIG. 20, a projection apparatus 20 may include a receiving module 205 and a projection module 206. The projection apparatus 20 may be configured to implement functions of the foregoing method embodiments, and therefore can implement beneficial effect of the foregoing method embodiments.

The receiving module 205 may be configured to receive a window projection operation input by a user. The projection module 206 may be configured to: in response to the received window projection operation, send display data of each of a plurality of application windows running in the source device to a target display device corresponding to each application window.

For example, the receiving module 205 and the projection module 206 may be integrated into the source device 100 shown in FIG. 1 to FIG. 3. The projection module 206 may include the data collection unit 101, the audio/video processing unit 102, the media processing unit 103, and the network processing unit 104 shown in FIG. 3. Both the receiving module 205 and the projection module 206 may be implemented by using software, or may be implemented by using hardware. For example, the following uses the projection module 206 as an example to describe an implementation of the projection module. Similarly, for an implementation of the receiving module 205, refer to the implementation of the projection module.

The module is used as an example of a software functional unit, and the projection module 206 may include code run on a computing instance. The computing instance may include at least one of a physical host (a computing device), a virtual machine, and a container. Further, there may be one or more computing instances. For example, the projection module 206 may include code running on a plurality of hosts/virtual machines/containers.

The module is used as an example of a hardware functional unit. The projection module 206 may be a device implemented by using an application-specific integrated circuit (application-specific integrated circuit, ASIC), a device implemented by using a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

It should be noted that, in another embodiment, the receiving module 205 may be configured to perform any step in the projection method performed by the source device, and the projection module 206 may be configured to perform any step in the projection method performed by the source device. Steps implemented by the receiving module 205 and the projection module 206 may be specified as required. The receiving module 205 and the projection module 206 respectively implement different steps in the projection method, to implement all functions of the projection apparatus.

With reference to the foregoing method embodiments, an embodiment of this application further provides a projection apparatus. The apparatus may be used in a server. In some embodiments, as shown in FIG. 21, a projection apparatus 21 may include a data receiving module 211 and a data sending module 212. The projection apparatus 21 may be configured to implement functions of the foregoing method embodiments, and therefore can implement beneficial effect of the foregoing method embodiments.

The data receiving module 211 may be configured to receive display data that is of a plurality of application windows and that is sent by a source device, where the display data of each of the plurality of application windows is sent by the source device based on a received window projection operation. The data sending module 212 may be configured to send, based on a correspondence between the plurality of application windows and display devices, the display data of each of the plurality of application windows running on the source device to a target display device corresponding to each application window.

For example, the data receiving module 211 and the data sending module 212 may be integrated into the server 300 shown in FIG. 12. Both the data receiving module 211 and the data sending module 212 may be implemented by using software, or may be implemented by using hardware. For example, the following uses the data receiving module 211 as an example to describe an implementation of the data receiving module. Similarly, for an implementation of the data sending module 212, refer to the implementation of the data receiving module.

The module is used as an example of a software functional unit, and the data receiving module 211 may include code run on a computing instance. The computing instance may include at least one of a physical host (a computing device), a virtual machine, and a container. Further, there may be one or more computing instances. For example, the data receiving module 211 may include code running on a plurality of hosts/virtual machines/containers.

The module is used as an example of a hardware functional unit, the data receiving module 211 may be a device implemented by using an application-specific integrated circuit (application-specific integrated circuit, ASIC), a device implemented by using a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

It should be noted that, in another embodiment, the data receiving module 211 may be configured to perform any step in the projection method performed by the source device, and the data sending module 212 may be configured to perform any step in the projection method performed by the source device. Steps implemented by the data receiving module 211 and the data sending module 212 may be specified as required. The data receiving module 211 and the data sending module 212 separately implement different steps in the projection method, to implement all functions of the projection apparatus.

Functional modules in embodiments of this application may be integrated into one processor, or each of the modules may exist alone physically, or two or more modules are integrated into one module. The integrated module may be implemented in a form of hardware, or may be implemented in a form of a software functional unit.

When the integrated module is implemented in a form of a software function unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of a software product. The software product is stored in a storage medium and includes several instructions for instructing a computer device (which may be a personal computer, a server, a network device) or a processor (processor) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Based on a same technical concept as the foregoing method embodiments, an embodiment of this application further provides a source device, which may be configured to implement functions of the method embodiment shown in FIG. 18, and therefore can implement beneficial effect of the foregoing method embodiments.

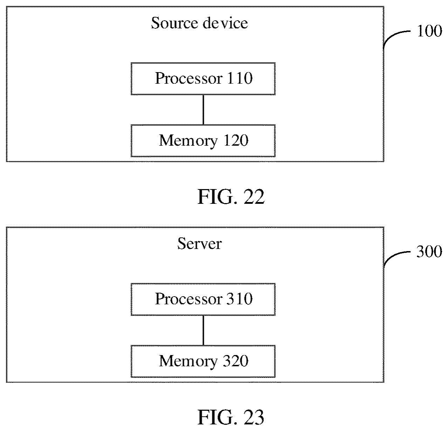

In some embodiments, a structure of the source device 100 may be shown in FIG. 22, and includes a processor 110 and a memory 120 connected to the processor 110. The processor 110 and the memory 120 may be connected to each other through a bus. The processor 110 may be used as a main processor of the source device 100, that is, a control core of the source device 100. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. A specific connection medium between the processor 110 and the memory 120 is not limited in this embodiment of this application.

The memory 120 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 120 is any other medium that can be configured to carry or store expected program code in a form of an instruction or a data structure and that can be accessed by a computer, but is not limited thereto. The memory 120 may be a combination of the foregoing memories. The memory 120 may be configured to store a software program and a module.

The processor 110 may include one or more processors. The processor 110 executes various function applications and data processing of the source device 100 by running the software program and the module that are stored in the memory 120, as shown in the projection method shown in FIG. 18.

In some embodiments, the source device 100 may further include a communication module, and the communication module is connected to the processor 110 and the memory 120 through the bus. The communication module may be configured to communicate with a display device or a server.

For example, the processor 110 may be configured to: receive a window projection operation input by a user, and in response to the received window projection operation, send display data of each of a plurality of application windows running in the source device to a target display device corresponding to each application window.

It may be understood that the structure shown in this embodiment of this application does not constitute a specific limitation on the source device. In some other embodiments of this application, the source device may include more or fewer components than those shown in the figure, or combine some components, or split some components, or have different component arrangements. The components shown in the figure may be implemented by hardware, software, or a combination of software and hardware.

Based on a same technical concept as the foregoing method embodiments, an embodiment of this application further provides a server, which may be configured to implement functions of the method embodiment shown in FIG. 19, and therefore can implement beneficial effect of the foregoing method embodiments.

In some embodiments, a structure of the server 300 may be shown in FIG. 23, and includes a processor 310 and a memory 320 connected to the processor 310. The processor 310 and the memory 320 may be connected to each other through a bus. The processor 310 may be used as a main processor of the server 300, that is, a control core of the server 300. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. A specific connection medium between the processor 310 and the memory 320 is not limited in this embodiment of this application.

The memory 320 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 320 is any other medium that can be configured to carry or store expected program code in a form of an instruction or a data structure and that can be accessed by a computer, but is not limited thereto. The memory 320 may be a combination of the foregoing memories. The memory 320 may be configured to store a software program and a module.

The processor 310 may include one or more processors. The processor 310 executes various function applications and data processing of the server 300 by running the software program and the module that are stored in the memory 320, as shown in the projection method shown in FIG. 19.

In some embodiments, the server 300 may further include a communication module, and the communication module is connected to the processor 310 and the memory 320 through the bus. The communication module may be configured to communicate with a display device or a source device.

For example, the processor 310 may be configured to: receive display data that is of a plurality of application windows and that is sent by the source device, and send, based on a correspondence between the plurality of application windows and display devices, the display data of each of the plurality of application windows running on the source device to a target display device corresponding to each application window.

It may be understood that the structure shown in this embodiment of this application does not constitute a specific limitation on the source device. In some other embodiments of this application, the source device may include more or fewer components than those shown in the figure, or combine some components, or split some components, or have different component arrangements. The components shown in the figure may be implemented by hardware, software, or a combination of software and hardware.

The method steps in embodiments of this application may be implemented by hardware, or may be implemented by the processor by executing a computer program or instructions. The computer program or the instructions may constitute a computer program product.

An embodiment of this application further provides a computer program product, including computer-executable instructions. In an embodiment, the computer-executable instructions are used to enable a computer to perform functions in the method embodiment shown in FIG. 5 or FIG. 6.

The computer-executable instructions may be stored in a computer-readable storage medium. An embodiment of this application further provides a computer-readable storage medium. The computer-readable storage medium stores executable instructions. In an embodiment, the computer-executable instructions are used to enable a computer to perform functions in the method embodiment shown in FIG. 5 or FIG. 6.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by a computer, or may be an application upgrade device such as a server or a data center that integrates one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid-state drive.

**In** embodiments of this application, unless otherwise stated or there is a logic conflict, terms and/or descriptions between different embodiments are consistent and may be mutually referenced, and technical features in different embodiments may be combined into a new embodiment based on an internal logical relationship thereof. In addition, the terms "include", "have", or any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that fall within the scope of this application.

It is clear that a person skilled in the art can make various modifications and variations to this application without departing from the scope of this application. In this case, this application is intended to cover these modifications and variations of the embodiments of this application provided that they fall within the scope of protection defined by the following claims and their equivalent technologies.

## Claims

1. A projection system, comprising a source device and a plurality of display devices communicatively connected to the source device, wherein
the source device is configured to send, based on a received window projection operation, display data of each of a plurality of application windows running in the source device to a target display device corresponding to each application window; and
a first display device in the plurality of display devices is configured to receive and display display data of a first application window from the source device, wherein the first display device is a target display device corresponding to the first application window, and the first application window is any one of the plurality of application windows.

2. The projection system according to claim 1, wherein the window projection operation comprises a first window projection operation, the first window projection operation indicates that the target display device corresponding to the first application window is the first display device, and the source device is specifically configured to:
receive the first window projection operation, and establish a correspondence between the first application window and the first display device; and
send the display data of the first application window to the first display device based on the correspondence between the first application window and the first display device.

3. The projection system according to claim 2, wherein the source device is further configured to:
receive a projection end operation for the first application window or the first display device, and delete the correspondence between the first application window and the first display device.

4. The projection system according to any one of claims 1 to 3, wherein
the first display device is further configured to receive a reverse control operation performed by a user on the display data of the first application window, and send the reverse control operation to the source device; and
the source device is further configured to receive the reverse control operation from the first display device, and perform the reverse control operation on the first application window.

5. The projection system according to claim 4, wherein the source device is specifically configured to:
determine, based on the correspondence between the first application window and the first display device, that an object of the reverse control operation is the first application window.

6. The projection system according to any one of claims 1 to 5, wherein the source device is further configured to:
before receiving a window projection operation, establish a projection channel with each of the plurality of display devices, wherein a projection channel corresponding to the source device and the first display device is used to transmit the display data of the first application window sent by the source device to the first display device.

7. The projection system according to claim 1, wherein the projection system further comprises a server, and the source device is communicatively connected to the plurality of display devices through the server;
the source device is specifically configured to send, through the server, the display data of each of the plurality of application windows to the target display device corresponding to each application window; and
the first display device is specifically configured to receive, through the server, the display data of the first application window from the source device.

8. The projection system according to claim 7, wherein
the source device is specifically configured to send the display data of the plurality of application windows and a correspondence between the plurality of application windows and display devices to the server; and
the server is configured to send, based on the correspondence between the plurality of application windows and the display devices, the display data of each of the plurality of application windows from the source device to the target display device corresponding to each application window.

9. The projection system according to claim 7, wherein
the source device is specifically configured to send the display data of the plurality of application windows to the server; and
the server is configured to: determine, from the plurality of display devices, the target display device corresponding to each of the plurality of application windows, and establish the correspondence between the plurality of application windows and the display devices; and send, based on the correspondence between the plurality of application windows and the display devices, the display data of each of the plurality of application windows from the source device to the target display device corresponding to each application window.

10. The projection system according to any one of claims 7 to 9, wherein
the source device is further configured to: before receiving a window projection operation, send a device information obtaining request to the server, wherein the device information obtaining request carries identification information of a device group, and the device group is a device group to which a plurality of display devices pre-connected to the source device belong; and
the server is further configured to send, to the source device based on the identification information the device group that is carried in the device information obtaining request, device information of the plurality of display devices comprised in the device group, wherein the device information of the display device comprises a device identifier and device parameter information of the display device.

11. A projection method, applied to a source device, wherein the source device is communicatively connected to a plurality of display devices, and the method comprises:
receiving a window projection operation input by a user; and
in response to the received window projection operation, sending display data of each of a plurality of application windows running in the source device to a target display device corresponding to each application window.

12. The method according to claim 11, wherein the window projection operation comprises a first window projection operation, the first window projection operation indicates that a target display device corresponding to a first application window is a first display device in the plurality of display devices, and in response to the received window projection operation, sending the display data of each of the plurality of application windows running in the source device to the target display device corresponding to each application window comprises:
in response to the first window projection operation, establishing a correspondence between the first application window and the first display device, and sending display data of the first application window to the first display device based on the correspondence between the first application window and the first display device.

13. The method according to claim 11 or 12, wherein the method further comprises:
in response to a received projection end operation for the first application window or the first display device, deleting the correspondence between the first application window and the first display device.

14. The method according to any one of claims 11 to 13, wherein the method further comprises:
receiving the reverse control operation from the first display device, and performing the reverse control operation on the first application window.

15. The method according to claim 14, wherein receiving the reverse control operation from the first display device, and performing the reverse control operation on the first application window comprises:
receiving the reverse control operation from the first display device, and determining, based on the correspondence between the first application window and the first display device, that an object of the reverse control operation is the first application window; and
performing the reverse control operation on the first application window.

16. The method according to any one of claims 11 to 15, wherein the method further comprises:
before receiving a window projection operation, establishing a projection channel with each of the plurality of display devices, wherein a projection channel corresponding to the source device and the first display device is used to transmit the display data of the first application window sent by the source device to the first display device.

17. The method according to claim 11, wherein the source device is communicatively connected to the plurality of display devices through a server, and in response to the received window projection operation, sending the display data of each of the plurality of application windows running in the source device to the target display device corresponding to each application window comprises:
in response to the received window projection operation, sending, to the server, the display data of the plurality of application windows and a correspondence between the plurality of application windows and display devices, and sending, through the server, the display data of each of the plurality of application windows to the target display device corresponding to each application window; or
in response to the received window projection operation, sending the display data of the plurality of application windows to the server, determining, from the plurality of display devices through the server, the target display device corresponding to each of the plurality of application windows, and sending the display data of each of the plurality of application windows to the target display device corresponding to each application window.

18. The method according to claim 17, wherein the method further comprises:
before receiving a window projection operation, sending a device information obtaining request to the server, and receiving device information that is of a plurality of display devices comprised in the device group and that is returned by the server, wherein the device information obtaining request carries identification information of the device group, the device group is a device group to which a plurality of display devices pre-connected to the source device belong, and the device information of the display device comprises a device identifier and device parameter information of the display device.

19. A projection apparatus, used in a source device, wherein the source device is communicatively connected to a plurality of display devices, and the apparatus comprises:
a receiving module, configured to receive a window projection operation input by a user; and
a projection module, configured to: in response to the received window projection operation, send display data of each of a plurality of application windows running in the source device to a target display device corresponding to each application window.

20. The apparatus according to claim 19, wherein the window projection operation comprises a first window projection operation, the first window projection operation indicates that a target display device corresponding to a first application window is a first display device in the plurality of display devices, and the projection module is specifically configured to:
in response to the first window projection operation, establish a correspondence between the first application window and the first display device, and send display data of the first application window to the first display device based on the correspondence between the first application window and the first display device.

21. The apparatus according to claim 20, wherein the projection module is further configured to:
in response to a received projection end operation for the first application window or the first display device, delete the correspondence between the first application window and the first display device.

22. The apparatus according to claim 19, wherein the source device is communicatively connected to the plurality of display devices through a server, and the projection module is specifically configured to:
in response to the received window projection operation, send, to the server, the display data of the plurality of application windows and a correspondence between the plurality of application windows and display devices, and send, through the server, the display data of each of the plurality of application windows to the target display device corresponding to each application window; or
in response to the received window projection operation, send the display data of the plurality of application windows to the server, determine, from the plurality of display devices through the server, the target display device corresponding to each of the plurality of application windows, and send the display data of each of the plurality of application windows to the target display device corresponding to each application window.

23. A source device, comprising a memory and a processor, wherein the memory stores a computer program that can be run on the processor, and when the computer program is executed by the processor, the processor is enabled to implement the method according to any one of claims 11 to 18.

24. A computer-readable storage medium, wherein the computer-readable storage medium stores computer-executable instructions, and the computer-executable instructions are used to enable a computer to perform the method according to any one of claims 11 to 18.

25. A computer program product, comprising computer-executable instructions, wherein the computer-executable instructions are used to enable a computer to perform the method according to any one of claims 11 to 18.
